# DEMANDE DE BREVET EUROPEEN

(11) **EP 1 104 782 A1**
(43) Date de publication de la demande: **06.06.2001**
(21) Numéro de dépôt: 00403228.0
(22) Date de dépôt: 20.11.2000
(51) Int. Cl.: C08L 23/04, C08J 5/18

(54) **Films à base de copolymères d'éthylène et gants constitués de ces films**

(30) Priorité: 25.11.1999 FR 9914834
(71) Demandeur: Atofina, 92091 Paris La Défense (FR)
(72) Inventeur: Degrand, Michel, Les Bruyères du Bois Taillefer, 27300 Bernay (FR)

(57) **Abrégé**

La présente invention concerne des films constitués d'un mélange comprenant en poids (i) 70 à 98 % d'un polymère (Z) choisi parmi (a) un polyéthylène (C) obtenu par catalyse métallocène, (b) un copolymère (A) éthylène/acétate de vinyle ou éthylène/(méth)acrylate d'alkyle, et (c) leur mélange et (ii) 30 à 2 % en poids de polyéthylène haute densité. La présente invention concerne également des gants fabriqués à partir des films précédents par soudure thermique desdits films.

## Description

La présente invention concerne des films à base de polyéthylène et des gants constitués de ces films.

En chirurgie, en médecine, dans le domaine vétérinaire, en coiffure pour l'application par exemple des shampoings colorants, dans les locaux sans poussière de l'industrie électronique et dans de nombreuses applications, on utilise des gants à usage unique. Les gants de la présente invention sont de ce type.

Le brevet EP 643 743 décrit des gants en copolymères blocs SBS (styrène-butadiène-styrène) ou SIS (styrène-isoprène-styrène). On prépare une émulsion de ces copolymères puis on y trempe un moule en forme de gant. On laisse ensuite sécher le tout et on obtient le gant.

Le brevet EP 244 982 décrit des films constitués (en poids) de 30 à 80 % d'un copolymère éthylène-acrylate de méthyle et de 70 à 20 % de VLDPE (very low density polyéthylène ou polyéthylène très basse densité). La proportion d'acrylate de méthyle dans le copolymère est comprise entre 17 et 22 % en poids, la densité du VLDPE est comprise entre 0,902 et 0,910 et le MFI (melt flow index ou indice de fluidité à l'état fondu) entre 0,1 et 10 g/10 min. De préférence les proportions du copolymère éthylène-acrylate de méthyle et du VLDPE sont respectivement, en poids, 50 à 70 et 50 à 30 %. Les gants sont produits par soudure du film.

Il est beaucoup plus simple de faire des gants par soudure d'un film que par trempage d'un moule et séchage. Les films décrits dans EP 244 982 sont collants et doivent être chargés d'agents antibloquants et d'agents glissants. De plus, leur allongement à la rupture n'est pas assez élevé.

Le but de l'invention est de faire des films ayant une résistance élevée au poinçonnement, c'est à dire qu'il doit être pratiquement impossible de les percer avec les doigts et les films doivent avoir un allongement à la rupture d'au moins 100 %. Ces conditions sont en effet un minimum pour éviter que les gants fabriqués à partir de ces films ne se déchirent lorsqu'on les enfile sur les mains.

Un autre but de l'invention est de faire des films ayant un aspect soyeux.

Un autre but de l'invention est de faire des films ayant une bonne élasticité nécessaire pour une question de confort en vue d'obtenir un ajustement beaucoup plus précis au niveau de la main et améliorer de ce fait la précision des mouvements. On entend par élasticité au sens de l'invention, la possibilité d'étirer le film à 80 % de sa longueur à une température comprise entre 15 et 25°C pendant 1 minute, le film revenant à 25 % près ou moins de sa longueur initiale après étirement. L'allongement rémanent est donc au maximum de 25 %.

La présente invention concerne un film comprenant un mélange comportant:
- de 70 à 98 % en poids d'un polymère (Z) choisi parmi
   (a) un polyéthylène (C) obtenu par catalyse métallocène,
   (b) un copolymère (A) de l'éthylène et d'un monomère choisi parmi l'acétate de vinyle et un (méth)acrylate d'alkyle, et
   (c) leur mélange ; et
- de 30 à 2 % en poids de polyéthylène haute densité (HDPE).

Selon un mode de réalisation de l'invention, dans ledit mélange de polyéthylène (C) et de copolymère (A), la proportion du polyéthylène (C) est de 0 à 50% en poids et la proportion du copolymère (A) est de 50 à 100% en poids.

La présente invention concerne également des gants constitués des films précédents. Ces gants sont fabriqués par soudure thermique des films.

On désigne par polyéthylène métallocène, les polymères obtenus par copolymérisation d'éthylène et d'alpha oléfines telles que par exemple butène, héxène ou octène en présence d'un catalyseur monosite constitué généralement d'un atome d'un métal pouvant être par exemple du zirconium ou du titane et de deux molécules cycliques alkyles liées au métal. Plus spécifiquement, les catalyseurs métallocènes sont habituellement composés de deux cycles cyclopentadiéniques liés au métal. Ces catalyseurs sont fréquemment utilisés avec des aluminoxanes comme cocatalyseurs ou activateurs, de préférence le méthylaluminoxane (MAO). Le hafnium peut aussi être utilisé comme métal auquel le cyclopentadiène est fixé. D'autres métallocènes peuvent inclure des métaux de transition des groupes IV A, V A, et VI A. Des métaux de la série des lanthanides peuvent aussi être utilisés.

Ces polymères sont homogènes en composition. De préférence, on utilisera un polyéthylène métallocène: éthylène/alpha-oléfine du type butène, hexène ou octène, de masse volumique < 0,91.

La répartition moléculaire de ces polyéthylènes métallocènes est très étroite et se caractérise par un indice de polydispersité ou polymolécularité (rapport I = Mw/Mn) faible, en général I < 3 et de préférence I < 2 dans lequel Mw et Mn désignent respectivement la masse molaire moyenne en poids et la masse molaire moyenne en nombre.

Le copolymère (A) peut être un copolymère de l'éthylène et de l'acétate de vinyle ou un copolymère de l'éthylène et d'un (meth)acrylate d'alkyle.

S'agissant du copolymère de l'éthylène et de l'acétate de vinyle, la proportion d'acétate de vinyle est avantageusement comprise entre 5 et 40 % en poids et de préférence entre 18 et 40 % en poids.

Le MFI (Melt Flow Index ou indice de fluidité à l'état fondu) de ces copolymères est avantageusement compris entre 0,3 et 50 g/10 min (à 190°C ; sous 2,16 kg).

S'agissant du copolymère (A) de l'éthylène et d'un (méth)acrylate d'alkyle, les alkyles peuvent avoir jusqu'à 24 atomes de carbone. Des exemples d'acrylate ou méthacrylate d'alkyle sont notamment le méthacrylate de méthyle, l'acrylate d'éthyle, l'acrylate de n-butyle, l'acrylate d'isobutyle, l'acrylate de 2-éthylhexyle.

Le MFI de ces copolymères est avantageusement compris entre 0,3 et 50 g/10 min (à 190°C ; sous 2,16 kg).

Avantageusement la teneur en (meth)acrylate d'alkyle est comprise entre 18 et 40 % en poids de (Z) et de préférence entre 22 et 28 %. Ces copolymères peuvent être fabriqués par polymérisation radicalaire en tube ou autoclave à des pressions comprises entre 1000 et 2500 bars.

On ne sortirait pas du cadre de l'invention si (A) était un mélange de deux ou plusieurs des copolymères précédents.

Le polyéthylène haute densité (HDPE) est décrit dans le KIRK-OTHMER, 4ème édition, Vol 17, pages 704 et 724-725. Il s'agit selon ASTM D 1248-84 d'un polymère de l'éthylène ayant une densité au moins égale à 0,940. L'appellation HDPE concerne à la fois les homopolymères de l'éthylène et ses copolymères avec de faibles proportions d'a-oléfine. La densité est avantageusement comprise entre 0,941 et 0,965. Dans la présente invention le MFI du HDPE est avantageusement compris entre 0,1 et 50 g/10 min (à 190°C ; sous 2,16 kg).

A titre d'exemple on peut citer l'ELTEX A 2008® de densité 0,961 et MFI 0,8 (en g/10 min à 190°C sous 2,16 kg) et le Stamylex 7359® de densité 0,954 et MFI 35 (en g/10 min à 190°C sous 2,16 kg).

Avantageusement la proportion de HDPE est de 4 à 12 parties pour 96 à 88 parties de polymère (Z).

Selon une forme préférée de l'invention le mélange comprend, en plus de (Z) et du HDPE, un copolymère (B) à blocs styrèniques. Ce copolymère (B) comprend des blocs polystyrène et des blocs polybutadiène ou polyisoprène éventuellement hydrogénés.

Les copolymères blocs (B) sont décrits dans ULLMANN'S ENCYCLOPEDIA OF INDUSTRIAL CHEMISTRY, 5e édition (1995), Vol A 26 p. 655-659. Avantageusement ce sont des copolymères de formule E-D-E ou de formule: 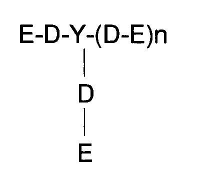 dans laquelle n vaut 1, 2 ou 3 et E et D représentent des blocs. Les blocs E représentent du styrène polymérisé et les blocs D du butadiène polymérisé, de l'isoprène polymérisé ou un mélange de butadiène et d'isoprène polymérisé. Les blocs D peuvent être hydrogénés (il s'agit alors par exemple des SEBS).

Y est une entité polyfonctionnelle provenant par exemple d'agents de couplage polyfonctionnels qu'on utilise dans la fabrication des copolymères blocs en étoile. De tels agents ainsi que ces copolymères blocs sont décrits dans US 3 639 521.

Des copolymères blocs en étoile préférés contiennent 15 à 45 % en poids et mieux 25 à 35 % en poids de motifs styrène. La masse molaire est d'au moins 140 000 et mieux d'au moins 160 000.

Des polymères blocs en étoile particulièrement préférés sont ceux décrits dans EP 451 920. Ces copolymères sont à base de styrène et d'isoprène, la masse molaire des blocs polystyrène est d'au moins 12 000 et la teneur en polystyrène est de 35 % en poids, au plus de la masse totale du copolymère bloc.

Les copolymères blocs linéaires préférés ont une masse molaire entre 70 000 et 145 000 et contiennent 12 à 35 % en poids de polystyrène. Des copolymères blocs linéaires particulièrement préférés sont ceux à base de styrène et d'isoprène décrits dans le brevet européen EP 451 919. Ces copolymères ont des blocs polystyrène de masse molaire entre 14 000 et 16 000 et une teneur en polystyrène comprise entre 25 et 35 % en poids du copolymère bloc. La masse molaire est entre 80 000 et 145 000 et mieux entre 100 000 et 145 000.

La proportion du copolymère à blocs styrèniques (B) peut représenter jusqu'à 25 parties pour 100 parties du mélange de (Z) et du HDPE et de préférence 5 à 20 parties.

Les films de l'invention ont un allongement rémanent d'au plus 25 % de la longueur initiale. On mesure cet allongement rémanent par traction sur une bandelette (15 mm de large avec longueur initiale Io=100 mm) à une vitesse de 500 mm/min jusqu'à 80 % d'allongement puis redescente jusqu'à force nulle. Ce test est effectué à température ambiante. On note les forces en N en montée (m) et en descente (d) à 20 %, 40 %, 60 % et 80 % puis l'allongement rémanent. Avantageusement cet allongement rémanent est compris entre 15 et 22 %.

Une autre caractéristique des films de l'invention est la force de traction en montée (m) mesurée dans les conditions citées plus haut pour ce qui concerne la mesure de l'allongement rémanent à un allongement de 60 % d'un film d'épaisseur 30 pm. Cette force est inférieure ou égale à 5 N et avantageusement comprise entre 2 et 5 N.

Le mélange de l'invention peut aussi comprendre des agents glissants, des agents antibloquants, des antioxydants, des anti U.V. et des charges.

A titre d'exemple d'agents glissants, on peut citer les N,N'-éthylène bis amide de formule:

[Cn H2n+1 - C(0) - NH - CH2]2

dans laquelle n est un nombre entier allant de 17 à 21.

A titre d'illustration de N,N'-éthylène bis amide utilisable selon la présente invention, on citera le N,N'-éthylène bis stéaramide, le N,N'-éthylène bis oléamide, le N,N'-éthylène bis gadoléamide, le N,N'-éthylène bis cétoléamide, le N,N'-éthylène bis érucamide, et le mélange d'au moins deux N,N'-éthylène bis amides précités.

A titre d'exemple d'agents glissants, on peut encore citer les sels métalliques d'acides gras tels que les stéarates de zinc.

A titre d'exemple d'agents antibloquants, on peut citer les amides primaires d'acide gras, la silice, le talc et le mélange d'au moins deux des composés précités. A titre d'illustration d'amide primaire d'acide gras saturé, on peut citer l'érucamide, l'oléamide, le stéaramide, le palmitamide et le mélange d'au moins deux des composés précités.

A titre d'exemple d'antioxydants, on peut citer les phénols à empêchement stérique, les mercaptans et les phosphites.

A titre d'exemple d'absorbeurs de rayonnement ultraviolet, on peut citer les benzophénones substituées, les phénylbenzotriazoles substitués et les amines à empêchement stérique.

La quantité totale des agents glissants, des agents antibloquants, des antioxydants et des anti U.V. peut représenter jusqu'à 10 parties pour 100 parties du mélange de (Z) et du HDPE.

Les mélanges du polymère (Z), du HDPE et éventuellement du copolymère (B) à blocs styrèniques sont préparés par les techniques habituelles des polymères thermoplastiques dans des extrudeuses mono ou double vis, des mélangeurs ou des appareils du type Ko malaxeur BUSS®.

Le polymère (Z), le HDPE et le copolymère (B) éventuel peuvent être introduits séparément dans le dispositif mélangeur.

Le HDPE peut être ajouté sous forme de mélange maître dans du polymère (Z). On peut ajouter dans ces appareils les additifs tels que les agents glissants, les agents antibloquants, les antioxydants, les anti U.V. et les charges soit tels quels, soit sous forme de mélange maître dans le polymère (Z), soit sous forme de mélange maître avec le HDPE. Les mélanges obtenus peuvent, soit alimenter directement les machines de fabrication du film, soit être récupérés sous forme de granulés que l'on peut ensuite refondre et introduire dans les machines de fabrication du film.

On peut utiliser différentes méthodes pour fabriquer les films. On utilise avantageusement le soufflage de gaine et le procédé cast. Ces procédés sont connus en eux-mêmes. L'épaisseur des films peut varier de 5 à 250 µm et est de préférence entre 8 et 50 µm.

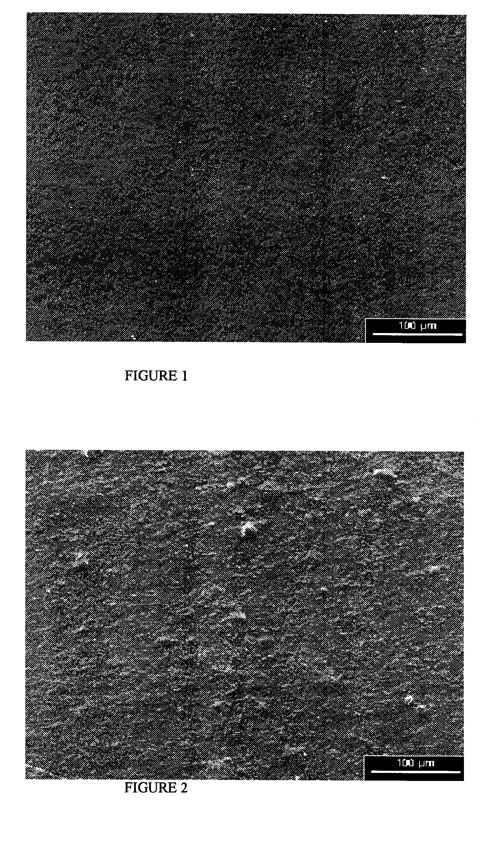

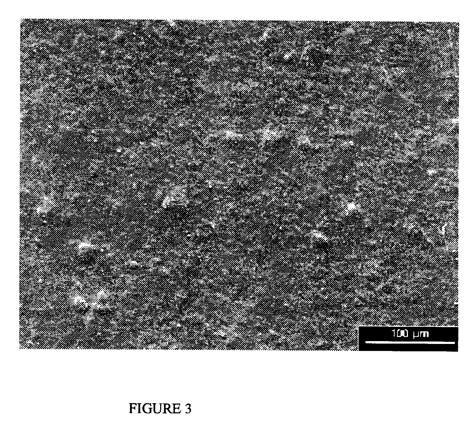

On a observé que les films de l'invention avaient un aspect granuleux ressemblant à un embossage alors qu'on ne procède pas à un embossage au cours de leur fabrication. On peut observer cet aspect sur les photographies des films en figures 1 à 3.

S'agissant des gants, on obtient ces derniers par soudage/découpe des films selon une forme appropriée, le gant étant ensuite séparé du film. L'avantage des gants de l'invention est d'avoir un comportement élastique, une excellente sensibilité tactile jointe à de bonnes propriétés mécaniques. Un autre avantage des gants de l'invention est de permettre une bonne tenue mécanique des soudures avec des cordons de soudures très étroits pratiquement imperceptibles au toucher compris entre 0,05 et 1 mm.

### EXEMPLES

On a utilisé les produits suivants:
**24MG005 :** copolymère éthylène-acrylate de méthyle ayant une teneur en acrylate de 24 % en poids de MFI 0,5 (en g/10 min à 190°C sous 2,16 kg) et contenant 0,25 % en poids d'éthylène bis oléamide et 0,15 % en poids d'erucamide.
**MMX1331 :** mélange maître constitué de 78,7 % en poids de HDPE, 19,8 % en poids de talc 10MOOS® et 1,5 % en poids d'erucamide; le HDPE est le ELTEX A 2008® de densité 0,961 et MFI 0,8 (en g/10 min, à 190°C sous 2,16 kg).
**14MG02 :** mélange de (i) 89.8 % d'un copolymère éthylène-acrylate de méthyle ayant une teneur en acrylate de 14 % en poids de MFI 2 (en g/10 min, à 190°C sous 2,16 kg), de (ii) 0,2 % en poids d'erucamide, de (iii) 2 % en poids de talc 10MOOS et de (iv) 8 % en poids de HDPE ELTEX A2008.

On a fabriqué des films puis on a mesuré les propriétés suivantes:
- Mesure des propriétés en traction : (Norme ISO 527/3 :95)
   Bandelette de 15mm de large découpées dans le sens longitudinal et dans le sens transversal, de lo(longueur initiale) de 50 mm,
   vitesse de traction de 1 mm/min pour la mesure du module (régression linéaire entre 0.05 % et 0.25 %) puis vitesse de 500 mm/min jusqu'à rupture.
- Mesure de la déchirure : (Norme NFT 54-141 :84, ISO 6383/2)
   Méthode elmendorf: éprouvette à rayon constant
- Mesure du dart test : (Norme NFT 54-109 :73) Méthode A: hauteur de chute de 66 cm.
- Test d'élasticité:
   Méthode interne pour mesurer le cycle d'hystérésis des films:
   Traction sur bandelette (15 mm de large avec lo=100 mm) à une vitesse de 500 mm/min jusqu'à 80 % d'allongement puis redescente jusqu'à force nulle.
   On note les forces en N en montée (m) et en descente (d) à 20 %, 40 %, 60 % et 80 % puis l'allongement rémanent.
- Traction sur la soudure des gants
   Deux gants ont été réalisés sur machine JOISTEN avec les films d'épaisseur 30 µm constitués de 24MG005 et du mélange maître MMX1331 en proportions 90/10 pour le 1^{er} gant et 95/5 pour le second gant. Traction à 100 mm/min de la soudure jusqu'à rupture puis traction d'une bandelette du gant sans soudure jusqu'à rupture. On fait le rapport des deux forces obtenues pour avoir la qualité de la soudure (NFT 54-122 :76)

Les figures 1, 2 et 3 représentent les photos des films à base de 24MG005 et contenant respectivement 0, 5 et 10% en poids de mélange maître MMX1331. Comme on peut le voir sur ces photos l'ajout du MMX1331 crée à la surface du film des micro-rugosités qui améliorent l'aspect tactile du film et lui confère cet aspect soyeux.

Les résultats sont repris dans les tableaux 1, 2 et 3 suivants.

**TABLEAU 1**

| Composition du film | traction soudure du gant | | |
|---|---|---|---|
| | force soudure en N | force rupture film en N | qualité de la soudure |
| 24MG005+ MM X1331 90/10 | 6,6 0,5 | 10,7 0,6 | 62 % |
| 24MG005+ MM X1331 95/5 | 7,4 0,1 | 8,2 0,5 | 90 % |

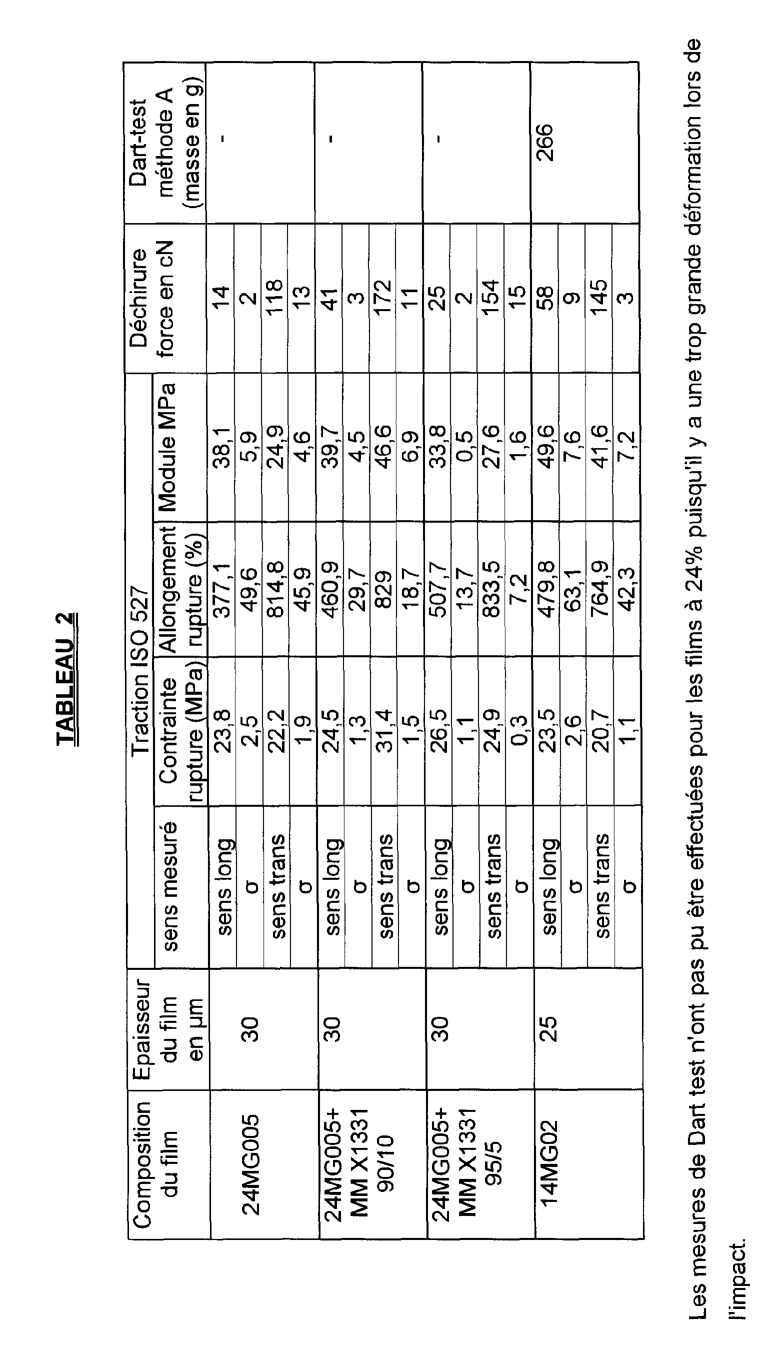

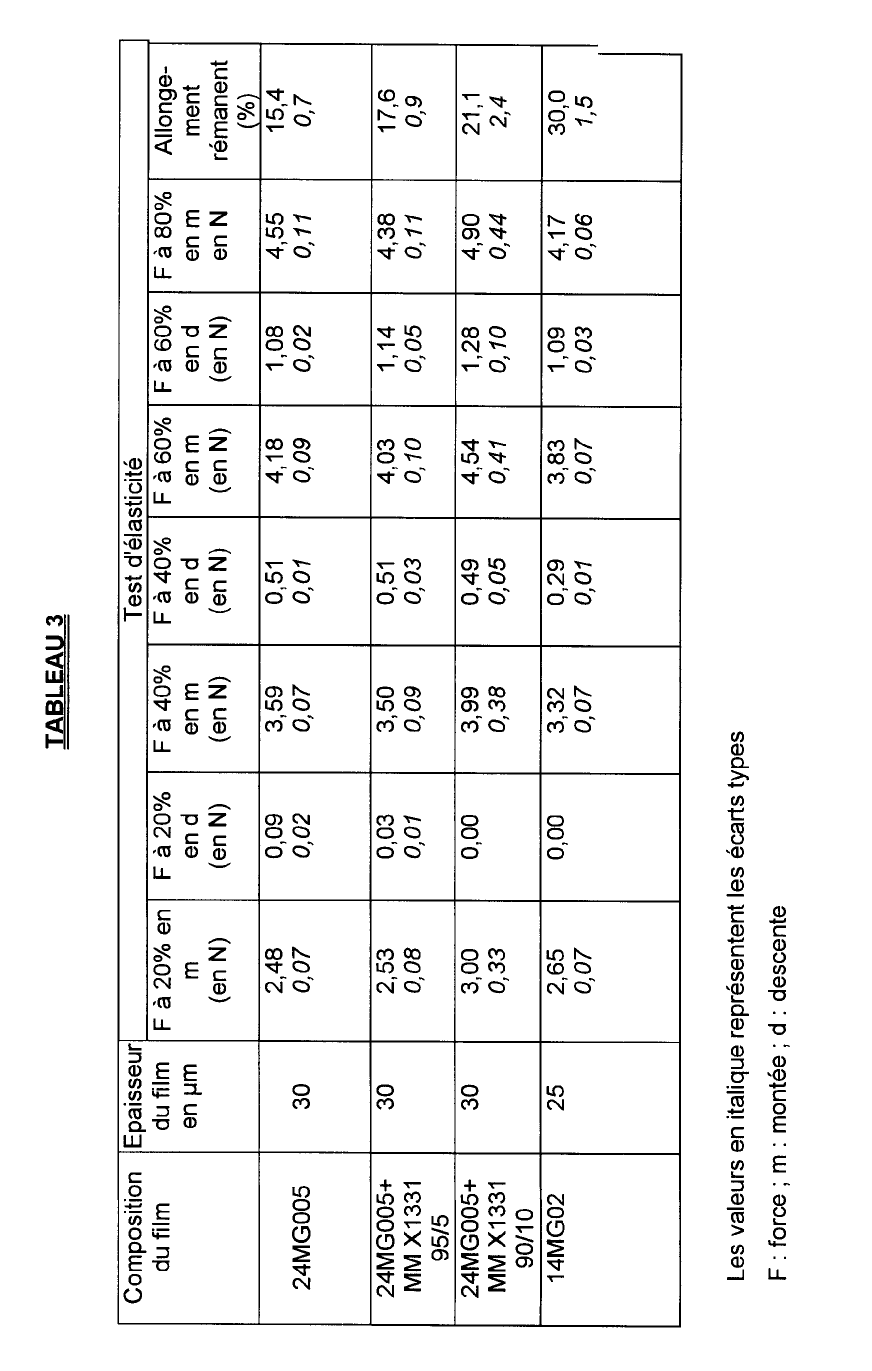

## Revendications

1. Film comprenant un mélange comportant :
- de 70 à 98% en poids d'un polymère (Z) choisi parmi (a) un polyéthylène (C) obtenu par catalyse métallocène, (b) un copolymère (A) de l'éthylène et d'un monomère choisi parmi l'acétate de vinyle, la teneur en acétate de vinyle étant comprise entre 18 et 40% en poids, et un (méth)acrylate d'alkyle, et (c) un mélange dudit polyéthylène (C) et dudit copolymère (A); et
- de 30 à 2% en poids de polyéthylène haute densité (HDPE).

2. Film selon la revendication 1, caractérisé en ce que dans ledit mélange de polyéthylène (C) et de copolymère (A), la proportion du polyéthylène (C) est de 0 à 50% en poids et la proportion du copolymère (A) est de 50 à 100% en poids.

3. Film selon la revendication 1 dans lequel la teneur en (meth)acrylate d'alkyle est comprise entre 18 et 40 % en poids.

4. Film selon l'une des revendications 1 à 3 dans lequel la proportion de HDPE est de 4 à 12 parties pour 96 à 88 parties de polymère (Z).

5. Film selon l'une quelconque des revendications 1 à 4 dans lequel le mélange comprend, en plus du polymère (Z) et du HDPE, un copolymère (B) à blocs styrèniques.

6. Film selon la revendication 5 dans lequel la proportion de (B) est de 5 à 20 parties pour 100 parties de l'ensemble constitué du polymère (Z) et du HDPE.

7. Film selon l'une quelconque des revendications 1 à 6 ayant un allongement rémanent d'au plus 25 %, la mesure étant faite à température ambiante sur une bandelette (15 mm de large avec longueur initiale lo=100 mm) à une vitesse de traction de 500 mm/min jusqu'à 80 % d'allongement puis redescente jusqu'à force nulle.

8. Film selon l'une quelconque des revendications 1 à 6 ayant une force de traction inférieure à 5 N, la mesure étant faite à température ambiante sur une bandelette (15 mm de large avec longueur initiale lo=100 mm) d'épaisseur 30 pm à une vitesse de traction de 500 mm/min jusqu'à 60 % d'allongement.

9. Gant constitué d'un film selon l'une quelconque des revendications précédentes.
